# EUROPÄISCHE PATENTANMELDUNG

(11) **EP 2 495 299 A1**
(43) Veröffentlichungstag der Anmeldung: **05.09.2012**
(21) Anmeldenummer: 11157037.0
(22) Anmeldetag: 04.03.2011
(51) Int. Cl.: C10G 70/04, C10K 1/02, C10K 1/04, B01D 53/00

(54) **Anlage zur thermischen Verwertung von organischem Material, und Fusionsbehälter einer solchen Anlage**

(71) Anmelder: Eckhoff, Peter, 49393 Lohne (DE); Garwing, Michael, 49377 Vechta (DE); Stankovic-Gansen, Mari Jan, 56755 Kaisersesch (DE)
(72) Erfinder: Stankovicc-Gansen, Mari Jan, Dr.-Ing., 56755 Kaisersesch (DE)
(74) Vertreter: Habbel, Ludwig

(57) **Zusammenfassung**

Bei einer Anlage zur thermischen Verwertung von organischem Material, mit einem als Reaktor bezeichneten Behälter, der zur Aufnahme des zu verwertenden Materials einen beheizbaren Reaktionsraum aufweist, und der eine Auslassleitung für ein gasförmiges Reaktionsprodukt aufweist, sowie mit einem Reinigungsbehälter für das im Reaktor erzeugte Gas, schlägt die Erfindung vor, dass der Reinigungsbehälter einen Einlass aufweist, durch welchen das Gas in den Reinigungsbehälter einströmt, dass dem Einlass nachgeschaltet eine Prallplatte angeordnet ist, derart, dass das in den Reinigungsbehälter einströmende Gas gegen die Prallplatte strömt, wobei die Prallplatte kühlbar ausgestaltet ist, dass der Reinigungsbehälter mittels einer beweglichen Wand ein veränderliches Volumen aufweist, und dass der Reinigungsbehälter einen Auslass aufweist, durch welchen das Gas aus dem Reinigungsbehälter ausströmt.

## Beschreibung

Die Erfindung betrifft eine Anlage nach dem Oberbegriff des Anspruchs 1.

Derartige Anlagen sind in vielfältiger Ausgestaltung bekannt. Dabei ist es bekannt, das erzeugte Gas einem Verbrennungsmotor zuzuführen und diesen Verbrennungsmotor im Rahmen eines Blockheizkraftwerks zu betreiben, so dass er einerseits mechanische Energie abgibt, die zum Betreiben von Maschinen oder von einem elektrischen Generator genutzt werden kann, und so dass dieser Verbrennungsmotor weiterhin thermische Energie in Form von Wärme abgibt, die beispielsweise dazu benutzt werden kann, den Reaktor zu beheizen. Der Reaktor erzeugt dann wiederum weiteres Reaktionsgas, so dass eine höchst effiziente Verwertung des organischen Materials erfolgen kann und die Anlage möglichst ohne die Zufuhr von äußerer Energie auskommt bzw. sogar elektrische oder Wärme-Energie nach außen abgeben kann.

Das im Reaktor erzeugte Reaktionsgas enthält einerseits den erwünschten Anteil an brennbarem Gas, andererseits jedoch auch zusätzliche Stoffe, wie Teer, Wasser, Phosphor, Schwefel u. dergleichen. Diese Stoffe können die Leistungsfähigkeit des mit dem Reaktionsgas betriebenen Verbrennungsmotors beeinträchtigen oder zu unerwünscht kurzen Wartungsintervallen dieses Verbrennungsmotors führen. In beiden Fällen wird der Betrieb der gesamten Anlage wirtschaftlich nachteilig beeinflusst. Der Erfindung liegt die Aufgabe zugrunde, eine gattungsgemäße Anlage dahingehend zu verbessern, dass die Wirtschaftlichkeit der Anlage verbessert wird.

Diese Aufgabe wird durch eine Anlage mit den Merkmalen des Anspruchs 1 gelöst sowie durch einen Reinigungsbehälter einer solchen Anlage gemäß Anspruch 15.

Die Erfindung schlägt mit anderen Worten vor, das Gas nicht in der Zusammensetzung direkt zu verarbeiten, mit der es als Reaktionsgas aus dem Reaktor kommt, sondern das Reaktionsgas zunächst zu reinigen. Hierzu ist vorschlagsgemäß ein Reinigungsbehälter vorgesehen, in welchen das Gas einströmt. Das Gas gelangt gegen eine kühlbare Prallplatte, so dass bestimmte Anteile durch Kondensation aus dem Gas abgeschieden werden. Möglichst stabile Verhältnisse innerhalb des Reinigungsbehälters werden dadurch erzielt, dass ein möglichst gleichbleibender Druck im Behälterinneren eingestellt und beibehalten werden kann. Zu diesem Zweck weist der Reinigungsbehälter eine bewegliche Wand auf, so dass er ein veränderliches Volumen bereitstellen kann. Durch einen entsprechenden Auslass kann das gereinigte Gas aus dem Reinigungsbehälter ausströmen, so dass Reingas aus dem Reinigungsbehälter abgezogen werden kann, welches von den unerwünschten Beimischungen der aus dem Reaktor stammenden Gaszusammensetzung weitestgehend befreit ist.

Vorteilhaft kann die Wirksamkeit der Prallplatte dadurch vergrößert werden, dass ein regelrechter Gassammelraum geschaffen wird, der die Verweildauer des aus dem Einlass strömenden Gases an der Prallplatte verlängert. Auf diese Weise wird die Wirksamkeit der Prallplatte verbessert und eine verbesserte Reinigungswirkung dadurch erzielt, dass die Kondensation von bestimmten Gasbeimischungen verstärkt wird. Auch durch den stärkeren Abkühlungseffekt des Gases wird bereits eine zusätzliche Reinigungswirkung unterstützt wird, die aufgrund unterschiedlicher spezifischer Gewichte dazu führt, dass sich im oberen Bereich des Reinigungsbehälters möglichst reines brennbares Gas sammelt, während die demgegenüber unerwünschten Beimischungen im unteren Bereich des Reinigungsbehälters verbleiben.

Dementsprechend kann vorteilhaft der Auslass, über den das Brenngas, also das gereinigte Gas, aus dem Reinigungsbehälter ausströmt, höher angeordnet sein, was seine Mündungsöffnung betrifft, als der Einlass, über den das ungereinigte Gas vom Reaktor in den Reinigungsbehälter einströmt.

Vorteilhaft kann die Volumenveränderbarkeit des Reinigungsbehälters auf einfache Weise dadurch ermöglicht werden, dass ein schwimmender Deckel vorgesehen ist, der haubenartig ausgestaltet ist, also außer der eigentlichen Deckelfläche noch einen nach unten ragenden umlaufenden Wandabschnitt aufweist. Mit dieser umlaufenden Wand taucht der Deckel in einen Zwischenraum ein, der von einer doppelwandigen Wand gebildet wird, die im unteren Bereich des Reinigungsbehälters vorgesehen ist. Beispielsweise kann der Reinigungsbehälter insgesamt in ein entsprechend doppelwandiges, den Zwischenraum bildendes Unterteil und den haubenartigen Deckel aufgeteilt sein.

Der Zwischenraum ist nach oben offen und mit einer Flüssigkeit gefüllt, so dass der Deckel unter seinem Eigengewicht zunächst bis auf eine maximale Tiefe abgesenkt ist. Anschließend jedoch, wenn das Innere des Reinigungsbehälters mit Gas gefüllt wird, kann der Deckel problemlos nach oben verlagert werden, so dass er schwimmend gelagert ist, wobei die Flüssigkeit zudem eine wirksame gasdichte Abdichtung zwischen dem doppelwandigen Unterteil des Reinigungsbehälters und dem Deckel bewirkt. Bei zunehmender Zufuhr von Gas in den Reinigungsbehälter kann also das Volumen des Behälters problemlos vergrößert werden, so dass nicht etwa ein relevant höherer Druck erforderlich ist, um zusätzliches Gas in den bereits mit Gas gefüllten Sammelbehälter einbringen zu können. Auf diese Weise ist ein möglichst problemloser Betrieb des Reaktionsbehälters möglicht unter möglichst gleichbleibenden Bedingungen, da bei der thermischen Verwertung von organischem Material das entstehende Gas nicht gegen stark unterschiedliche Drücke in den Reinigungsbehälter gefördert werden muss.

Vorteilhaft kann der erwähnte, mit Flüssigkeit gefüllte Zwischenraum der doppelwandigen Behälterwand mit einem Flüssigkeitszulauf versehen sein, wobei die Zufuhr von frischer Flüssigkeit in den Zwischenraum mit Hilfe eines Zulaufsperrventils gesteuert werden kann, welches wahlweise geöffnet oder verschlossen werden kann.

Bei einer derartigen Ausgestaltung des Reinigungsbehälters kann vorteilhaft ein Füllstandssensor vorgesehen sein, der den Stand der Flüssigkeit im Zwischenraum erfasst. Sollte ein Anteil der Flüssigkeit entwichen sein, beispielsweise verdunstet, so wird irgendwann ein Mindestfüllstand unterschritten und sensorisch erfasst, so dass dann mittels einer entsprechenden Steuerung das Zulaufsperrventil automatisch geöffnet und der Flüssigkeitsverlust im Zwischenraum wieder ausgleichen kann.

Vorteilhaft kann nicht nur Flüssigkeit in den Zwischenraum zugeführt werden, sondern es kann auch ein Flüssigkeitsablauf vorgesehen sein, der in den Zwischenraum mündet, so dass Flüssigkeit kontrolliert aus dem Zwischenraum abgeführt werden kann. Dabei ist dieser Flüssigkeitsablauf dauerhaft geöffnet, so dass zuverlässig verhindert werden kann, dass ein unerwünscht hoher Flüssigkeitsstand im Zwischenraum auftreten kann. Auf diese Weise kann ausgeschlossen werden, dass Flüssigkeit versehentlich über die Innenwand der doppelwandigen Behälterwand übertreten und in das Innere des Reinigungsbehälters gelangen kann.

Beispielsweise kann die Flüssigkeit in einem solchen Maß zugeführt werden, dass dies nicht nur zum Ausgleich von einem eventuellen Flüssigkeitsverlust ausreichend ist, sondern dass auch noch im Überschuss weitere frische Flüssigkeit in den Zwischenraum der doppelwandigen Behälterwand des Reinigungsbehälters eingeführt wird. Dies kann beispielsweise zum Temperieren der Wand dienen: Wenn ein bestimmtes Temperaturniveau im Reinigungsbehälters nicht überschritten werden soll, so kann eine Kühlung durch Zufuhr frischer, kühler Flüssigkeit erfolgen, wobei der doppelwandige Behälter als Kühlfläche dient. Dementsprechend kann ein Temperatursensor vorgesehen sein, der die Temperatur der Flüssigkeit in dem Zwischenraum der doppelten Behälterwand erfasst. Eine Steuerung ist mit dem Temperatursensor wirksam verbunden und öffnet bei Überschreitung einer vorbestimmten Höchsttemperatur das Zulaufsperrventil automatisch, so dass dann kühlere frische Flüssigkeit in den Zwischenraum einströmen kann. Der ständig geöffnete Flüssigkeitsablauf stellt dabei sicher, dass ein Flüssigkeitsstand innerhalb der doppelwandigen Behälterwand ein vorbestimmtes Niveau nicht überschreitet.

Wenn die Prallplatte wärmeleitend mit der Innenwand des doppelwandigen Unterteils des Reinigungsbehälters verbunden ist, wir die Prallplatte automatisch dadurch gekühlt, dass sie an der Kühlwirkung der Flüssigkeit teilhat, welche ja auch die Innenwand kühlt. Die Kühlwirkung, die über die Zufuhr der frischen Flüssigkeit möglich ist, kann jedoch über diese Kühlwirkung hinausgehend noch intensiver genutzt werden: es kann vorteilhaft vorgesehen sein, dass die Prallplatte einen Hohlraum aufweist, der an den Zwischenraum angeschlossen ist, so dass nicht nur der Zwischenraum, sondern auch die Prallplatte selbst von der Flüssigkeit durchströmt werden können.

Vorteilhaft kann der Gasauslass des Reinigungsbehälters ein Rückschlagventil aufweisen, so dass nicht automatisch jede beliebige Gasmenge aus dem Reinigungsbehälter austreten kann, sondern erst bei Überschreitung eines gewissen Mindestdrucks dieses Rückschlagventil automatisch öffnet und dementsprechend Gas aus dem Reinigungsbehälter entweichen kann.

Das bei der Reinigung des Gases entstehende Kondensat stellt zwar einen für den Betrieb eines Verbrennungsmotors unerwünschten Bestandteil im Gas dar, kann jedoch für sich genommen wirtschaftlich in verschiedenen Branchen sehr gut weiter genutzt werden, insbesondere in dem Kondensat enthaltenes Tannin. Daher kann vorteilhaft im Boden des Reinigungsbehälters eine Senke vorgesehen sein, in welcher das Kondensat gesammelt wird, indem diese Senke tiefer angeordnet ist als der übrige Boden.

Ein automatischer Betrieb der Anlage und insbesondere des Reinigungsbehälters kann dadurch unterstützt werden, dass in einer derartigen Senke ein Kondensatauslass vorgesehen ist, so dass das Kondensat aus der Senke abgezogen werden kann ohne den Reinigungsbehälter zu öffnen. Dabei ist vorteilhaft ein Füllstandssensor vorgesehen, der den Stand der Kondensats in der Senke erfasst. Mittels einer an den Füllstandssensor angeschlossenen Steuerung kann ein Ablaufventil, welches im Kondensatablauf vorgesehen ist, bei Erreichen bzw. Überschreitung eines vorbestimmten Füllstandes automatisch geöffnet werden. Dabei kann vorteilhaft ein zweiter Sensor als Füllstandssensor vorgesehen sein, der einen Mindestfüllstand in der Senke detektiert, so dass beim Ablassen des Kondensats das Ablaufventil im Kondensatablauf automatisch wieder geschlossen wird, wenn dieser Mindestfüllstand in der Senke erreicht ist.

Vorteilhaft kann der im Reinigungsbehälter gewünschte Innendruck eingestellt werden, insbesondere wenn der Reinigungsbehälter derart an den Reaktor angeschlossen ist, dass sich die Druckverhältnisse in dem einen automatisch auf die Druckverhältnisse in dem anderen dieser beiden genannten Anlagenteile auswirken. Somit lässt sich über den einstellbaren Druck im Reinigungsbehälter auch der Druck einstellen, der in der Reaktorkammer herrscht, indem erst bei Überwindung dieses vorgegebenen Druck Gas aus dem Reaktor austreten und in den Reinigungsbehälter einströmen kann. Auf besonders einfache und wirtschaftliche Weise kann die Einstellung des Drucks mit Hilfe von so genannten Justiergewichten vorgenommen werden, die an dem Deckel des Reinigungsbehälters befestigt werden, wobei der Deckel zur sicheren Festlegung derartiger Justiergewichte eine entsprechende Aufnahmevorrichtung aufweist. Auf diese Weise kann ein grundsätzlich möglichst leichter Deckel geschaffen werden, der dementsprechend bereits bei einem vergleichsweise niedrigen Innendruck im Reinigungsbehälter von zusätzlich einströmendem Gas angehoben wird. Mit Hilfe der Justiergewichte kann der Deckel in einem gewünschten Ausmaß beschwert und ein optimaler Betrieb des Reaktors eingestellt werden.

Der Reaktor selbst kann eine von außen beheizbare Wand aufweisen, die beispielsweise mit Hilfe der Abwärme von dem eingangs erwähnten Verbrennungsmotor beheizt wird. Eine Materialeinlassöffnung, durch die das thermisch zu verwertende Material in den Reaktor gelangt, ist in einem Bauteil vorgesehen, welches gekühlt werden kann. Dementsprechend weist dieses Bauteil einen Anschluss für ein Kühlmedium auf, beispielsweise eine Flüssigkeit. Auf diese Weise wird bei Temperaturen von beispielsweise zwischen 600°C und 900°C, die im Inneren des Reaktors herrschen können, eine möglichst konstante Temperatur des betreffenden Bauteils im Bereich von etwa 100 bis 150°C ermöglicht, so dass beispielsweise Verschlusselemente zuverlässig funktionieren und nach einer Beschickung des Reaktors mit Material die Materialeinlassöffnung zuverlässig verschlossen werden kann.

Ein Ausführungsbeispiel der Erfindung wird anhand der rein schematischen Darstellungen nachfolgend näher erläutert. Dabei zeigt
- Fig. 1: ein Blockschaltbild einer Anlage zum thermischen Verwerten von organischen Abfällen,
- Fig. 2: einen Längsschnitt durch einen Reaktor der Anlage,
- Fig. 3: einen Längsschnitt durch einen Gas-Reinigungsbe-hälter der Anlage, und
- Fig. 4: einen Querschnitt durch den Reinigungsbehälter von Fig. 3.

In den Zeichnungen ist mit 1 in Reaktor bezeichnet, in welchem organische Abfälle thermisch verwertet werden. Dieser organische Abfall gelangt von einem Vorratsbehälter 2 in den Reaktor 1 über eine als Ventil angedeutete Schleuse. Im Reaktor wird der organische Abfall zu Gas und zu Feststoffen zerlegt, wobei unten aus dem Reaktor 1 die als "Kohle" und "Mineral" bezeichneten Feststoffe abgezogen und in entsprechenden Produktbehältern 3 gelagert werden. Das erzeugte Gas gelangt aus dem Reaktor 1 in einen Reinigungsbehälter 4, wo es gereinigt wird. Dabei wird ein sehr reines, brennbares Gas erhalten, was aus dem Reinigungsbehälter 4 abgezogen wird und teilweise einem Verbrennungsmotor zugeführt wird, der Teil eines Blockheizkraftwerkes 5 ("BHKW") ist. Eine eventuell überschüssiger Anteil an diesem brennbaren Gas wird in einem Gasspeicher 6 gelagert und kann bedarfsweise dem BHKW 5 zugeführt werden, wenn die Versorgung mit Gas unmittelbar vom Reinigungsbehälter 4 für den Gasbedarf des BHKW 5 nicht ausreicht.

Abwärme des BHKW 5 wird teilweise zum Reaktor 1 geleitet, insbesondere die Verbrennungsabgase des Verbrennungsmotors des BHKW 5, so dass der Reaktor 1 ohne oder nur mit einem Minimum an zusätzlicher Energie auf eine Betriebstemperatur von 600 bis 900°C in seinem Inneren aufgeheizt werden kann.

Ein anderer Anteil der Abwärme des BHKW 5 wird über einen Wärmetauscher 7 dazu benutzt, das Wasser in einem Warmwasserspeicher 8 zu erwärmen, wobei hierzu insbesondere die Kühlflüssigkeit des wassergekühlten Verbrennungsmotors des BHKW 5 genutzt werden kann. Dieses im Warmwasserspeicher 8 vorhandene Wasser kann entweder als warmes Brauchwasser genutzt werden oder es kann als Heizungswasser zur Beheizung von Gebäuden bzw. Stallungen benutzt werden.

Das dem Reaktor zugeführte heiße Gas aus dem BHKW 5, welches zur Beheizung des Reaktors 1 genutzt wurde, wird anschließend über eine Heizleitung 9 aus dem Reaktor 1 herausgeführt. Zur Unterscheidung von dem Reaktionsgas, welches den Reaktor 1 verlässt, sowie von dem brennbaren Gas, welches aus dem Reinigungsbehälter 4 entnommen werden kann, wird das Gas aus dem BHKW 5, welches zunächst dem Reaktor zugeführt wird, unabhängig von seiner tatsächlichen Temperatur als "Heißgas" bezeichnet. Wie die Pfeile schematisch andeuten, werden aus der Heizleitung 9 Anteile dieses Heißgases abgezogen, um den organischen Abfall vorzuwärmen, der vom Vorratsbehälter 2 zum Reaktor 1 gefördert wird. Auch der Vorratsbehälter 2 wird mit dem Heißgas aus der Heizleitung 9 heraus vorgewärmt.

Ein verbleibender Rest des Heißgases gelangt aus der Heizleitung 9 in einen Wärmetauscher 10, so dass die Wärmeenergie des Heißgases optimal ausgeschöpft und genutzt werden kann. Das Heißgas gelangt aus dem Wärmetauscher 10 bzw. aus dem Vorratsbehälter 2 in einen Filter 11, so dass dieses nun möglichst weit abgekühlte Heißgas gefiltert wird und problemlos in die Umwelt emittiert werden kann.

Im BHKW 5 ist zudem ein elektrischer Generator 12 vorgesehen, wobei die dort erzeugte elektrische Energie einerseits innerhalb der gesamten Anlage 1 verwendet werden kann, beispielsweise um Fördereinrichtungen, eine elektronische Steuerung u. dgl. zu betreiben, und wobei überschüssige elektrische Energie nach außen ― also außerhalb der Anlage ― abgegeben werden kann, beispielsweise zur Versorgung benachbarter Gebäude oder um in das öffentliche Stromnetz eingespeist zu werden.

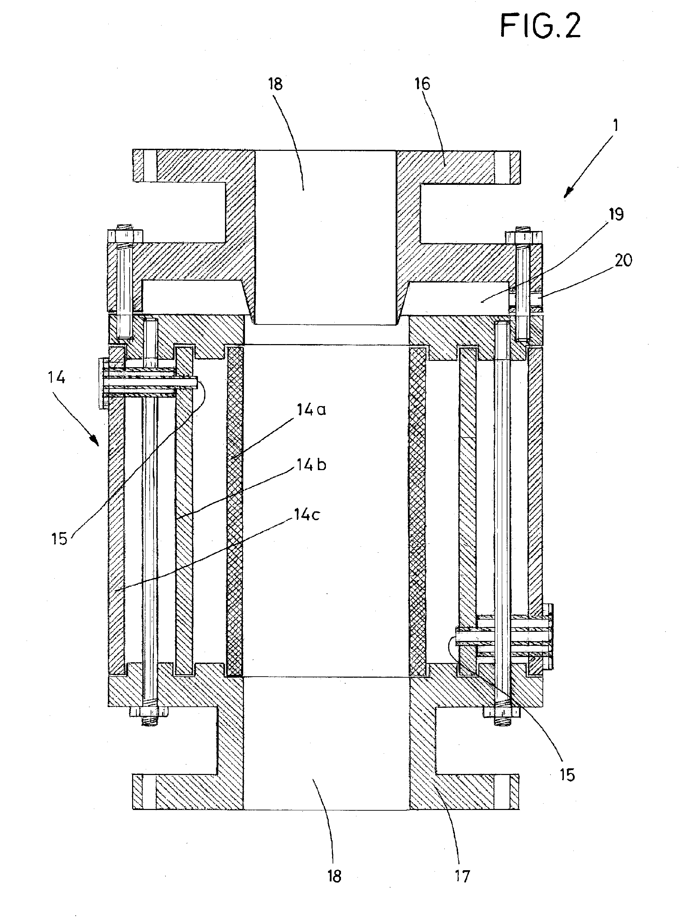

Der Reaktor 1 ist in Fig. 2 näher ersichtlich: Er weist eine dreifache Wand 14 auf, mit einer Innenwand 14a, die entweder eine geringe Wandstärke aufweist oder aus einem thermisch gut gleitenden Material wie z. B. Kupfer besteht. Weiterhin ist eine Zwischenwand 14b vorgesehen, so dass ein ringförmiger Hohlraum zwischen der Innenwand 14a und der Zwischenwand 14b geschaffen wird, der zur Beheizung des Reaktor-Innenraums genutzt werden kann. Hierzu sind Ein- und Auslässe 15 angedeutet. Auf diese Weise kann das erwähnte Heißgas von der Verbrennungskraftmaschine des Blockheizkraftwerkes 5 zur Beheizung des Reaktors 1 genutzt werden. Die Zwischenwand 14b kann vorteilhaft thermisch isoliert sein, um Wärmeverluste nach außen zu minimieren.

Weiterhin ist eine Außenwand 14c vorgesehen, so dass ein weiterer Raum in der Wand 14 geschaffen wird, welcher beispielsweise mit einem Isolationsmaterial gefüllt sein kann oder von Wasser oder einer ähnlichen Flüssigkeit durchströmt werden kann, um Überhitzungen des Reaktors 1 zu vermeiden und eine kontrollierte Kühlung der Wand 14 zu ermöglichen.

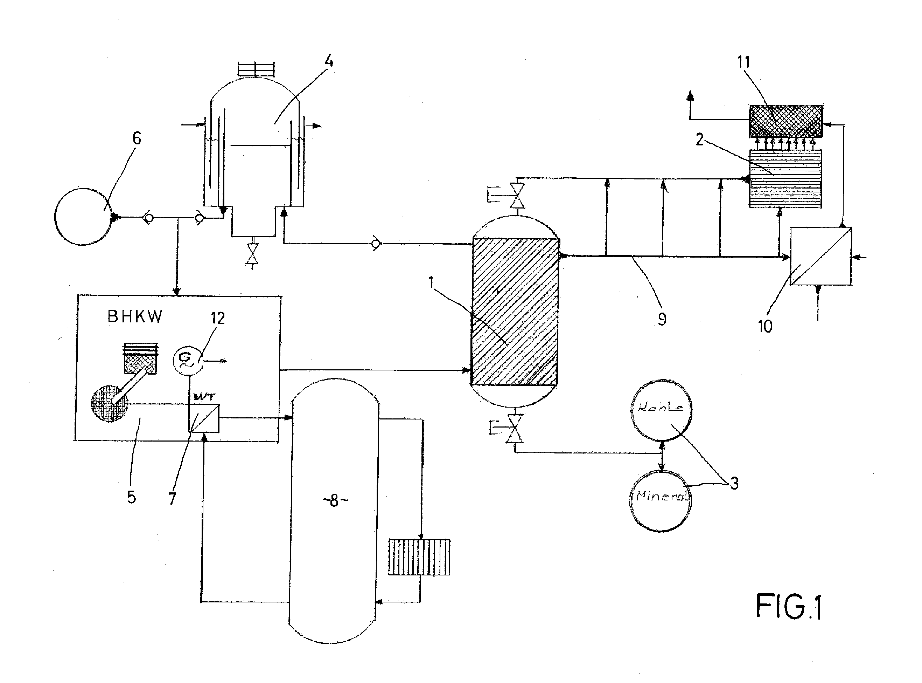

Der Reaktor 1 weist weiterhin einen Reaktorkopf 16 und einen Reaktorfuß 17 auf, wobei diese beiden Bauteile des Reaktors 1 jeweils eine Passageöffnung 18 aufweisen. So kann beispielsweise, wie schematisch auch anhand von Fig. 1 erläutert, der Reaktor 1 von oben mit thermisch zu verwertendem organischem Material beschickt werden, und die verbleibenden Feststoffe können nach unten aus dem Reaktorfuß 17 abgezogen werden. Um bei diesem Chargen-weisen und nicht kontinuierlichen Betrieb des Reaktors 1 die Passageöffnungen 18 zuverlässig verschließen zu können, sind sowohl der Reaktorkopf 16 als auch der Reaktorfuß 17 gekühlt, so dass sie eine zuverlässige Formbeständigkeit aufweisen und einen zuverlässig dichten Abschluss der Verschlusselemente sowie deren problemlose Beweglichkeit zum Öffnen und Verschließen der Passageöffnungen 18 sicherstellen.

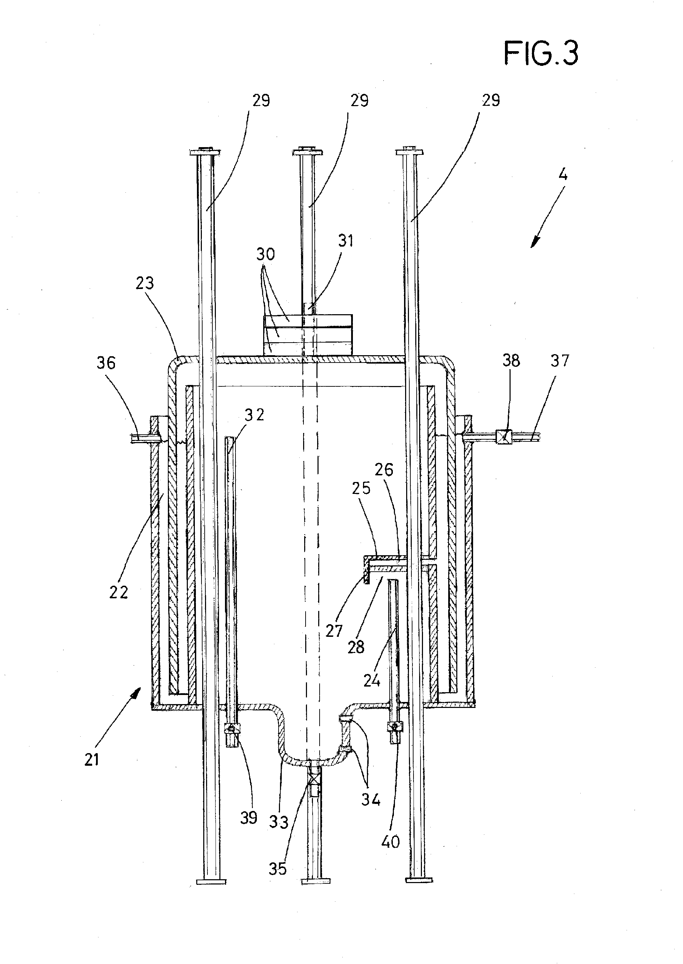

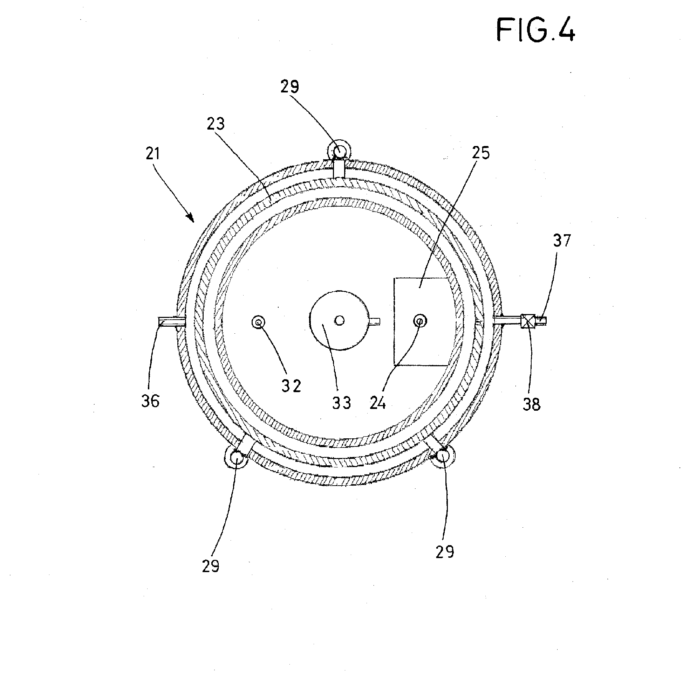

Die als Reaktionsgas bezeichneten, während des Reaktionsprozesses entstehenden gasförmigen Anteile des organischen Materials werden aus dem Innenraum des Reaktors 1 in einem Gassammelraum 19 gesammelt und können aus diesem Gassammelraum 19 durch einen Gasauslass 20 nach aus dem Reaktor 1 entweichen. Wie anhand von Fig. 1 erläutert, gelangt das Reaktionsgas anschließend in einen Reinigungsbehälter 4, der in den Fig. 3 und 4 zwar schematisch, aber detaillierter als in Fig. 1 dargestellt ist:

Der Reinigungsbehälter 4 weist ein doppelwandiges Unterteil 21 auf, welches einen ringförmigen, nach oben offenen Zwischenraum 22 schafft, der mit Wasser gefüllt ist. In den Zwischenraum 22 taucht ein haubenförmiger Deckel 23 ein, so dass ein gasdichter Abschluss des Reinigungsbehälters, und insbesondere von dessen Innenraum, ermöglicht ist. Reaktionsgas aus dem Reaktor 1 wird über einen Einlass 24 in den Reinigungsbehälter 4 eingeführt und strömt aus dem Einlass 24 gegen eine Prallplatte 25, die mit der doppelten Wand des Unterteils 21 in Strömungsverbindung steht, einen Hohlraum 26 aufweist, der ebenfalls mit dem Wasser gefüllt ist und die dementsprechend gekühlt ist. An ihrem Umfang weist die Prallplatte 25 einen nach unten ragenden Kragen 27 auf, so dass unterhalb der Prallplatte 25 ein Gassammelraum 28 geschaffen ist. Hierdurch wird die Verweildauer des aus dem Einlass 24 gelangenden Gases an der Prallplatte 25 verlängert.

Der Deckel 23 ist an drei Säulen 29 höhenbeweglich geführt. Einströmendes Gas bewirkt daher nicht in erster Linie eine Druckerhöhung im Inneren des Reinigungsbehälters 4, sondern vielmehr, dass sich der Deckel 23 anhebt, wenn das bisherige Volumen im Inneren des Reinigungsbehälters 4 mit Gas gefüllt ist. Dabei ist lediglich eine geringfügige Druckerhöhung zu verzeichnen, die aus der Überwindung des Gewichts resultiert, um den Deckel 23 anzuheben.

Zusätzliche Justiergewichte 30 sind auf eine stangenförmige Aufnahmevorrichtung 31 aufgefädelt, so dass hierdurch die erwähnte, zu überwindende Gewichtskraft des Deckels 31 beeinflusst werden kann und der im Inneren des Reinigungsbehälters 4 herrschende Druck auf diese Weise eingestellt werden kann.

Das Gas gelangt aus dem Reinigungsbehälter 4 durch einen Auslass 32 zum Blockheizkraftwerk 5 oder zum Gasspeicher 6.

Eine Senke 33 ist im Behälterboden des Reinigungsbehälters 4 vorgesehen, so das sich Kondensat in dieser Senke 33 sammelt. Zwei Füllstandssensoren 34 sind mit einer Steuerung verbunden, die ein Ablaufventil 35 ansteuert, so dass die Senke 33 regelmäßig automatisch entleert wird und der Flüssigkeitsstand in der Senke 33 im Bereich zwischen den beiden Füllstandssensoren 34 gehalten wird.

Als im Zwischenraum 22 des Unterteils 21 befindliche Flüssigkeit ist bei dem beschriebenen Ausführungsbeispiel in wirtschaftlich vorteilhafter Weise Wasser vorgesehen, wobei dies durch einen Flüssigkeitsablauf 36 aus dem Zwischenraum 22 gelangen kann und wobei dieser Flüssigkeitsablauf 36 ständig offen ist. Das Wasser kann in einem Kreislauf geführt werden, um den Wasserverbrauch zu minimieren. Aus dem Flüssigkeitsablauf 36 kann das Wasser in einen Zwischen- oder Vorratsbehälter geführt werden, in dem es verweilen und abkühlen kann. Wenn so genannte frische Flüssigkeit in den Zwischenraum 22 eingebracht werden soll, kann Wasser aus einer privaten Wasserversorgung oder aus der öffentlichen Trinkwasserversorgung eingeleitet werden, oder es kann das Wasser aus dem erwähnten Zwischen- oder Vorratsbehälter verwendet werden.

Frische Flüssigkeit kann durch einen Flüssigkeitszulauf 37 in den Zwischenraum 22 geführt werden, wobei im Flüssigkeitszulauf 37 ein Zulaufsperrventil 38 vorgesehen ist, welches ebenfalls an eine bzw. an dieselbe Anlagensteuerung angeschossen ist wie das Ablaufventil 35. Das Zulaufsperrventil 38 wird beispielsweise angesteuert und geöffnet, wenn mittels eines in Fig. 3 nicht dargestellten Füllstandssensors ein niedriger Flüssigkeitsstand im Zwischenraum 22 festgestellt wird. In diesem Fall kann die Flüssigkeit aufgefüllt werden, bis ein ausreichender Flüssigkeitsstand im Zwischenraum 22 sensorisch detektiert wird oder bis ein Durchlaufsensor im Flüssigkeitsablauf 36 eine Wasserströmung detektiert, so dass auf diese Weise sensorisch erfasst ist, dass der Flüssigkeitsstand im Zwischenraum 22 ausreichend hoch, nämlich bis zum Flüssigkeitsablauf 36 stehen muss.

Weiterhin ist ein in Fig. 3 ebenfalls nicht dargestellter Temperatursensor vorgesehen, der die Wassertemperatur im Zwischenraums 22 erfasst. Dies kann direkt erfolgen, beispielsweise mittels eines in die Flüssigkeit eingetauchten Temperatursensors, oder indirekt, beispielsweise durch Messung der Temperatur der Außen- oder der Innenwand des doppelwandigen Unterteils 21, gegebenenfalls unter Einbeziehung von Korrekturfaktoren wie z. B. Sonneneinstrahlung. Sobald die Wassertemperatur einen vorgegebenen Wert überschreitet, wird ebenfalls das Zulaufsperrventil 38 automatisch geöffnet, so dass über den Flüssigkeitszulauf 37 frisches Wasser in den Zwischenraum 22 einströmt, unabhängig vom Füllstand des Wassers in den Zwischenraum 22. Durch das nachströmende kühlere Wasser wird die Temperatur des Unterteils 21 und damit die Temperatur im Inneren des Reinigungsbehälters 4 auf ein gewünschtes Temperaturniveau abgesenkt, so dass bei Erreichen einer sensorisch erfassten, vorgegebenen niedrigeren Temperatur das Zulaufsperrventil 38 automatisch wieder geschlossen werden kann.

Der Austritt des gereinigten Gases aus dem Reinigungsbehälter 4 wird automatisch durch das Verhalten eines Rückschlagventils 39 bestimmt. Wenn dieses bei entsprechendem Innendruck im Reinigungsbehälter 4 gegen die Wirkung einer Federkraft öffnet, kann Gas aus dem Inneren des Reinigungsbehälters 4 entweichen, bis der Druck im Inneren des Reinigungsbehälters 4 so weit abgesenkt ist, dass das Rückschlagventil 39 federkraftbelastet automatisch wieder schließt.

In ähnlicher Wirkungsweise, allerdings mit umgekehrter Einbaulage, funktioniert ein weiteres Rückschlagventil 40 im Einlass 24, welches nur öffnet, wenn das im Reaktor 1 erzeugte Gas mit einem ausreichenden Druck im Einlass 24 ansteht, so dass dann gegen die Wirkung einer Federkraft das Rückschlagventil 40 automatisch öffnet und bei Unterschreitung des entsprechenden Drucks wieder automatisch schließt. Die Federkraft wird in diesem Fall durch den im Reinigungsbehälter herrschenden Druck und je nach Ventilkonstruktion auch durch das Eigengewicht des beweglichen Ventilkörpers selbst unterstützt, so dass die Federkraft gering sein kann oder sogar auf eine Feder ganz versichtet werden kann.

Fig. 4 zeigt in einem Querschnitt durch den Reinigungsbehälter 4 die doppelwandige Ausgestaltung des Unterteils 21, den dazwischen angeordneten Wandabschnitt des Deckels 23, den Flüssigkeitszulauf 37, den Flüssigkeitsablauf 36, die drei den Deckel 23 tragenden Säulen 29, den Einlass 24, die darüber befindliche Prallplatte 25, den Auslass 32 und die Senke 33.

## Patentansprüche

1. Anlage zur thermischen Verwertung von organischem Material,
mit einem als Reaktor bezeichneten Behälter,
● der zur Aufnahme des zu verwertenden Materials einen beheizbaren Reaktionsraum aufweist,
● und der eine Auslassleitung für ein gasförmiges Reaktionsprodukt aufweist
sowie mit einem Reinigungsbehälter für das im Reaktor erzeugte Gas,
**dadurch gekennzeichnet,**
**dass** der Reinigungsbehälter (4) einen Einlass (24) aufweist, durch welchen das Gas in den Reinigungsbehälter (4) einströmt,
**dass** dem Einlass (24) nachgeschaltet eine Prallplatte (25) angeordnet ist,
● derart, dass das in den Reinigungsbehälter (4) einströmende Gas gegen die Prallplatte (25) strömt,
● wobei die Prallplatte (25) kühlbar ausgestaltet ist,
**dass** der Reinigungsbehälter (4) mittels einer beweglichen Wand ein veränderliches Volumen aufweist,
und **dass** der Reinigungsbehälter (4) einen Auslass (32) aufweist, durch welchen das Gas aus dem Reinigungsbehälter (4) ausströmt.

2. Anlage nach Anspruch 1,
**dadurch gekennzeichnet,**
**dass** der Einlass (24) das Gas von unten gegen die Prallplatte (25) führend angeordnet ist,
und **dass** an der Unterseite der Prallplatte (25) ein nach unten vorstehender Kragen (27) vorgesehen ist, der einen nach unten offenen Gassammelraum (28) umgebend verläuft.

3. Anlage nach Anspruch 1 oder 2,
**dadurch gekennzeichnet,**
**dass** der Reinigungsbehälter (4) eine doppelwandige umlaufende Wand aufweist, die einen nach oben offenen Zwischenraum (22) einschließt,
und **dass** ein haubenartiger Deckel (23) vorgesehen ist, der einen umlaufenden Wandabschnitt aufweist, welcher in den Zwischenraum (22) von oben eintaucht,
wobei der Zwischenraum (22) mit einer Flüssigkeit gefüllt ist, auf welcher der Deckel (23) aufschwimmt.

4. Anlage nach Anspruch 3,
**dadurch gekennzeichnet,**
**dass** ein Flüssigkeitszulauf (37) in den Zwischenraum (22) mündet, wobei ein Zulaufsperrventil (38) in dem Flüssigkeitszulauf (37) vorgesehen ist, mittels welchem der Flüssigkeitszulauf (37) wahlweise geöffnet oder geschlossen werden kann.

5. Anlage nach Anspruch 4,
**dadurch gekennzeichnet,**
**dass** wenigstens ein den Stand der Flüssigkeit im Zwischenraum (22) erfassender Füllstandssensor vorgesehen ist, und dass eine Steuerung vorgesehen ist, die bei Unterschreitung eines Mindestfüllstandes das Zulaufsperrventil (28) automatisch öffnet.

6. Anlage nach Anspruch 3,
**dadurch gekennzeichnet,**
**dass** ein Flüssigkeitsablauf (36) in den Zwischenraum (22) mündet, wobei der Flüssigkeitsablauf (36) dauerhaft geöffnet ist.

7. Anlage nach den Ansprüchen 4 und 6,
**dadurch gekennzeichnet,**
**dass** wenigstens ein die Temperatur der Flüssigkeit im Zwischenraum (22) erfassender Temperatursensor vorgesehen ist, und dass eine Steuerung vorgesehen ist, die bei Überschreitung einer vorbestimmten Höchsttemperatur das Zulaufsperrventil (38) automatisch öffnet.

8. Anlage nach einem der vorhergehenden Ansprüche, **dadurch gekennzeichnet,**
**dass** die Prallplatte (25) einen Hohlraum (26) aufweist, welcher an den Zwischenraum (22) durchströmungswirksam angeschlossen ist und mit der Flüssigkeit gefüllt ist.

9. Anlage nach einem der vorhergehenden Ansprüche, **dadurch gekennzeichnet,**
**dass** der Auslass (32) des Reinigungsbehälters (4) ein Rückschlagventil (39) aufweist, welches automatisch bei Überschreitung eines vorbestimmten, im Inneren des Reinigungsbehälters (4) herrschenden Innendrucks öffnet.

10. Anlage nach einem der vorhergehenden Ansprüche, **dadurch gekennzeichnet,**
**dass** der Reinigungsbehälter (4) einen Boden aufweist, welcher mit einer Senke (33) zur Aufnahme von Kondensat versehen ist.

11. Anlage nach Anspruch 10,
**dadurch gekennzeichnet,**
**dass** an die Senke (33) ein Kondensatauslass angeschlossen ist,
und **dass** wenigstens ein den Stand des Kondensats in der Senke (33) erfassender Füllstandssensor (34) vorgesehen ist,
und **dass** eine Steuerung vorgesehen ist, die bei Überschreitung eines vorbestimmten Füllstandes ein den Kondensatablauf verschließendes Ablaufventil (35) automatisch öffnet.

12. Anlage nach einem der vorhergehenden Ansprüche,
**dadurch gekennzeichnet,**
**dass** der Deckel (23) eine Aufnahmevorrichtung (31) aufweist,
an welcher wenigstens ein Justiergewicht (30) abnehmbar gehalten ist.

13. Anlage nach einem der vorhergehenden Ansprüche,
**dadurch gekennzeichnet,**
**dass** der Auslass (32) im Reinigungsbehälter (4) höher mündend angeordnet ist als der Einlass (24).

14. Anlage nach einem der vorhergehenden Ansprüche,
**dadurch gekennzeichnet,**
**dass** der Reaktor (1) eine von außen beheizbare Wand (14) aufweist, welche eine Reaktionskammer umgibt,
und **dass** eine Materialeinlassöffnung vorgesehen ist, durch welche das zu verwertende Material in den Reaktor (1) gelangt,
wobei das die Materialeinlassöffnung aufweisende Bauteil des Reaktors (1) kühlbar ausgestaltet ist und einen Anschluss aufweist, durch welchen ein Kühlmedium zu diesem Bauteil zuführbar ist.

15. Reinigungsbehälter (4) einer nach einem der vorhergehenden Ansprüche ausgestalteten Anlage.
